# EUROPEAN PATENT SPECIFICATION

(11) **EP 1 484 291 B1**
(45) Date of publication and mention of the grant of the patent: **14.09.2011**
(21) Application number: 04012944.7
(22) Date of filing: 01.06.2004
(51) Int. Cl.: C03B 23/025, C03B 35/18, C03B 35/16, C03B 23/03

(54) **Method and apparatus for bending a glass sheet using curved rollers.**
Verfahren und Vorrichtung zum Biegen einer Glasscheibe mittels gebogenen Rollen
Procédé et dispositif pour bomber une feuille de verre à l'aide de rouleaux incurvés.

(30) Priority: 04.06.2003 JP 2003159092
(43) Date of publication of application: 08.12.2004
(73) Proprietor: Asahi Glass Company, Limited, Chiyoda-ku, Tokyo 100-8405 (JP)
(72) Inventor: Tsuchiya, Masahiro, Taketoyo-cho, Chita-gun, Aichi (JP); Maeda, Kenji, Taketoyo-cho, Chita-gun, Aichi (JP); Hori, Junji, Taketoyo-cho, Chita-gun, Aichi (JP); Harada, Masanao, Taketoyo-cho, Chita-gun, Aichi (JP); Tomioka, Masanori, Taketoyo-cho, Chita-gun, Aichi (JP)
(74) Representative: Müller-Boré & Partner Patentanwälte

(56) References cited:
- EP-A- 0 024 979
- EP-A- 0 719 736
- US-A- 4 787 504
- US-A- 5 004 492
- US-A- 5 201 928
- US-A- 5 246 477
- PATENT ABSTRACTS OF JAPAN vol. 1997, no. 06, 30 June 1997 (1997-06-30) -& JP 09 052724 A (ASAHI GLASS CO LTD), 25 February 1997 (1997-02-25)

## Description

The present invention relates to a bending system and bending method for a glass sheet.

Heretofore, bent glass sheets having different shapes and radiuses of curvature have been used for automobile windowpanes. That sort of bent glass sheets are produced by pressing a glass sheet against a mold, the glass sheet having been heated to a temperature near to the softening point (650 to 700°C) in a heating furnace.

The systems for producing a bent glass sheet are broadly classified into an out-of-furnace bending system wherein a mold is provided out of a heating furnace and an in-furnace bending system wherein a mold is provided in a heating furnace.

The in-furnace bending system is unlikely to cause trouble due to a decrease in temperature on bending since a glass sheet is bent with the heating temperature maintained. On the other hand, the out-of-furnace bending system needs to perform bending and tempering by air-cooling in a short period of time after heating treatment since a glass sheet is cooled by external air, which causes trouble in terms of bending precision or a degree of tempering.

In the case of the out-of-furnace bending system, a glass sheet, which has been taken out of the heating furnace, is preliminarily bent by being conveyed on bending rollers, the glass sheet is put on a lower mold and is pressed against an upper mold to be bent in a desired shape, and the bent glass sheet is transferred onto curved rollers to be conveyed to air-cooling/tempering apparatus (see JP-A-60-171239, page 6, Fig. 2)

The glass sheet bending system disclosed in the prior art reference conveys a glass sheet toward the air-cooling/tempering apparatus by rotating the curved rollers after the glass sheet has been bent by the upper and lower molds. As a result, it takes some time for the glass sheet to have been conveyed to the air-cooling/tempering apparatus since it takes some time for the glass sheet to be transferred from the lower mold onto curved rollers. Additionally, there is caused a problem that it is difficult to properly perform tempering since the glass sheet has been cooled by being heat-released because of contact with the curved rollers before being conveyed to the air-cooling/tempering apparatus.

In particular, there have been recently stronger demands for automobile windowpanes, which comprise thin sheets having a thickness of 3 mm or below. That sort of thin glass sheets are rapidly cooled when conveyed out of the heating furnace. This is because that sort of thin glass sheets have a smaller heat capacity than thick glass sheets (having a thickness beyond 3 mm). As the glass sheets are thinner, it is required to make the time period from bending to air-cooling and tempering shorter.

The present invention is proposed in consideration of the circumstances stated earlier. It is an object of the present invention to provide a bending system and a bending method for a glass sheet which are capable of making the period of time from bending to air-cooling and tempering shorter than before in an out-of-furnace bending system, and which are capable of having high productivity.

US 5 004 492 discloses a press bending apparatus including a continuous uninterrupted peripheral shaping rail mounted for vertical reciprocating movement for lifting a heated glass sheet from a roll conveyor and pressing it against a complementary shaping surface. Conveyor rolls are provided exteriorly of the shaping rail for advancing a sheet into position over the shaping rail, and additional separate rolls are mounted so as to be disposed within the confines of the shaping rail for supporting the sheet interiorly of the shaping rail for supporting and driving the interior rolls so as to permit vertical movement of the shaping rail between the interior and exterior rolls.

EP 0 719 736 A2 discloses a conveyor roll device for preliminarily bending sheet glass wherein a glass sheet that has been heated nearly to a softening point thereof is preliminarily bent by the conveyor roll device while being fed along a feed path to a bending press. The conveyor roll device has a succession of first straight rolls spaced along the feed path for supporting a central region of the glass sheet, and a succession of second straight rolls spaced along the feed path for supporting a marginal edge portion of the glass sheet. The second straight rolls are vertically tilted with respect to the first straight rolls. The first and second straight rolls alternate with each other along the feed path.

US 4 787 504 discloses an adjustable radius conveyor roll for shaping and conveying heat softened glass sheets. Interconnected glass sheet engaging members are rotatably mounted along a flexible shaft of the conveyor roll. The ends of the roll are pivotally connected to pivoting support arms. A roll flexing arrangement includes a collar positioned at the center of the roll and a roll flexing drive to move the center of the roll in a vertical direction to adjust the curved configuration of the conveying roll.

JP 9-52724 A discloses a bending device for sheet glass, wherein plural large-diameter ring rollers are mounted at the roller assemblies in the state of not interfering with press rings, by which a transporting surface is formed above the pressure rings with the large-diameter ring roller. Then, even if the kind of the sheet glass to be bent changes, the versatility of the roller assemblies is enhanced by changing the mounting positions of the large-diameter ring rollers in correspondence to the press rings for the fresh sheet glass.

In order to attain the object, the present invention provides a system for bending a glass sheet, comprising a heating furnace, which heats a glass sheet to a bending temperature; a plurality of rollers for preliminary bending, which convey the glass sheet discharged from the heating furnace to preliminarily bend the glass sheet; a first mold, which has the glass sheet preliminarily bent by the rollers put thereon, and which supports a peripheral edge of the glass sheet; a second mold, which has a bending surface to press the glass sheet put on the first mold thereagainst; an air-cooling/tempering apparatus, which blows a cooling medium to a surface of the bent glass sheet to temper the glass sheet; and a conveyor, which conveys the first mold with the bent glass sheet put thereon to the air-cooling/tempering apparatus.

It is preferable that the rollers for preliminary bending comprises curved rollers.

According to the invention, the rollers for preliminary bending comprise multi-articulated rollers.

It is preferable that the rollers for preliminary bending comprises horizontal rollers and inclined rollers provided in positions close to opposite ends of the horizontal rollers.

It is preferable that the respective rollers for preliminary bending have radiuses of curvature gradually changing along in a direction to convey the glass sheet.

It is preferable that the system further comprises glass sheet conveying rollers provided in the heating furnace, the glass sheet conveying rollers being the rollers for preliminary bending.

According to the invention, the system further comprises a controller, the controller dynamically changing radiuses of curvature of the rollers for preliminary bending in synchronization with conveyance of the glass sheet by the rollers for preliminary bending.

It is preferable that the system further comprises a curving device, which changes curving shapes of the rollers for preliminary bending, and a roller length adjuster, which adjusts respective lengths of the rollers for preliminary bending, wherein the rollers for preliminary bending are configured so that lengths of the rollers for preliminary bending can be adjusted by the roller length adjuster.

It is preferable that the roller length adjuster adjusts the lengths of the rollers for preliminary bending so as to gradually decrease from an upstream side toward a downstream side in the direction of conveying the glass sheet, whereby a conveying surface defined by the rollers for preliminary bending is formed in a shape approximate to a lateral surface of a circular cone or a circular cylinder.

The present invention also provides a method for bending a glass sheet, comprising heating a glass sheet to a bending temperature in a heating furnace; preliminarily bending the glass sheet discharged from the heating furnace by conveying the glass sheet on a plurality of rollers for preliminary bending; putting the glass sheet preliminarily bent on a first mold, which is formed in a shape along an outline of the glass sheet; relatively approaching the first mold and a second mold to press the glass sheet put on the first mold therebetween so as to bend the glass sheet into a desired shape, the second mold having a bending surface to press the glass sheet put on the first mold thereagainst; and conveying the first mold with the bent glass sheet put thereon to an air-cooling/tempering apparatus.

According to the invention, the method further comprises dynamically changing radiuses of curvature of the rollers for preliminary bending in synchronization with conveyance of the glass sheet by the rollers for preliminary bending.

The present invention also uses curved rollers comprising a plurality of roller units, each of which comprises a cylindrical roller rotatable about a shaft and bearings mounted to both ends of the shaft and having coupling portions provided thereon; flexible couplings, which couples shafts of adjacent roller units together; and supporting members, which support the coupling portions of the bearings of adjacent roller units.

It is preferable that the roller units have at least two different lengths.

In accordance with the system and the method according to the present invention, a glass sheet is conveyed to the air-cooling/tempering apparatus by the first mold used for pressing. As a result, it is possible to smoothly perform a series of movements of preliminarily bending a glass sheet discharged from the heating furnace, pressing the glass sheet preliminarily bent and air-cooling/tempering the pressed glass sheet, and it is possible to make the glass sheet discharged from the heating furnace into a curved and tempered glass sheet in a quite short time period. Accordingly, it is possible to produce products having a superior quality (such as precision in shape and a strength of tempering) in high volume in a shorter time period than before in accordance with the present invention. In particular, the rollers for preliminary bending can easily produce a curved glass sheet formed in a shape approximate to a lateral surface of a circular cone, and the present invention significantly contributes to provide an automobile backlite having an excellent design.

In the drawings:
Fig. 1 is a schematic view showing the structure of the bending apparatus for a glass sheet according to a first embodiment of the present invention;
Fig. 2 is a perspective view showing a roller conveyer for preliminary bending and a press ring reciprocating device;
Fig. 3 is a plan view of the roller conveyer for preliminary bending;
Fig. 4 is a perspective view showing the structure of a power transmission device for curved rollers;
Fig. 5 is a cross-sectional view showing essential parts in the roller unit for a curved roller;
Fig. 6 is a perspective view showing essential parts in the roller unit;
Fig. 7 is a perspective view showing a curving device for a curved roller;
Fig. 8 is a front view showing partly in section how the curved roller is curved;
Fig. 9 is a schematic view showing the structure of curved rollers wherein roller units having different lengths are used;
Fig. 10 is a front view of a curved roller comprising horizontal rollers and inclined rollers;
Fig. 11(a) to (f) are is schematic views showing an arrangement of curved rollers constructed as shown in Fig. 10;
Fig. 12 is a perspective view of the roller conveyer for preliminary bending according to a second embodiment of the present invention;
Fig. 13 is a plan view of the roller conveyer according to the second embodiment;
Fig. 14 is a perspective view showing the structure of a horizontal roller forming curved rollers shown in Fig. 12;
Fig. 15 is a structural view showing essential parts of a curving device;
Fig. 16 is an enlarged structural view of essential parts of a curved rod;
Fig. 17 is a plan view showing the attitude of supporting plates in accordance with the displacement positions of tables provided an upstream side and a downstream side;
Fig. 18 is a structural view a power transmission device for transmitting a rotary force to a curved roller;
Fig. 19 (a) and (b) are schematic perspective views showing a conveying surface defined by rollers for preliminary bending, which is approximate to a lateral surface of a circular cylinder and a conveying surface of rollers for preliminary bending, which is approximate to a lateral surface of a circular cone, respectively; and
Figs. 20(a) to (c) are schematic views showing various modes of timing when curved rollers are curved, respectively.

Now, preferred embodiments of the system for bending a glass sheet according to the present invention will be described, referring to the accompanying drawings.

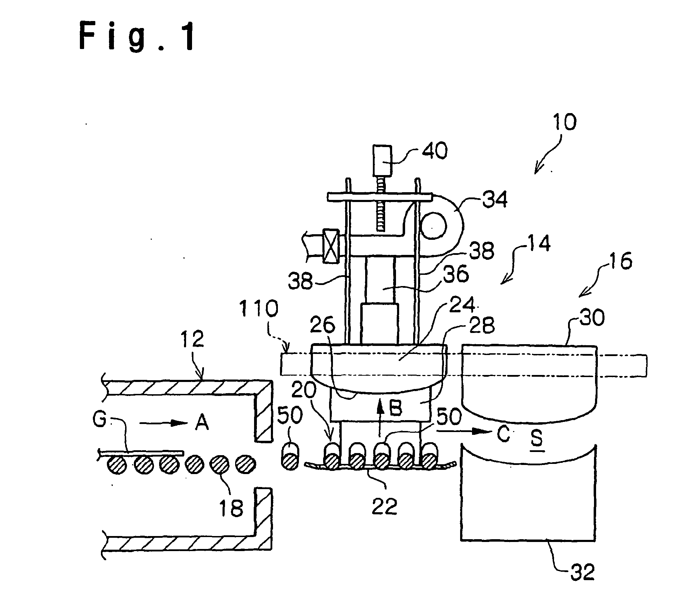

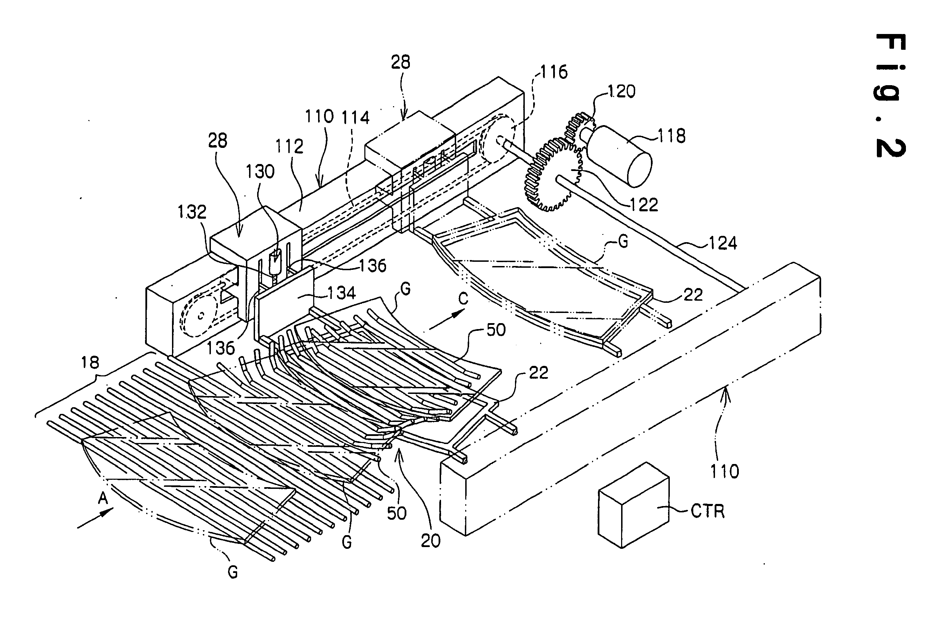

The bending system for a glass sheet 10 shown in Fig. 1 is an apparatus for producing an automobile backlite wherein a heating furnace 12, a bending apparatus 14 and an air-cooling/tempering apparatus 16 are provided in this order from an upstream side toward a downstream side in a conveying direction to convey a glass sheet G. The operations of the respective parts of the bending apparatus 10 are integrally controlled by a controller CTR shown in Fig. 2.

In the heating furnace 12 are provided a roller conveyer 18, which comprises a plurality of silica rolls formed in a straight rod-shape. The glass sheet G, which is flat before bending, is conveyed in the direction of an arrow A shown in Fig. 1 in the heating furnace 12 by the roller conveyer 18, being heated to a temperature close to the softening point (680 to 690°C) at the outlet of the heating furnace 12.

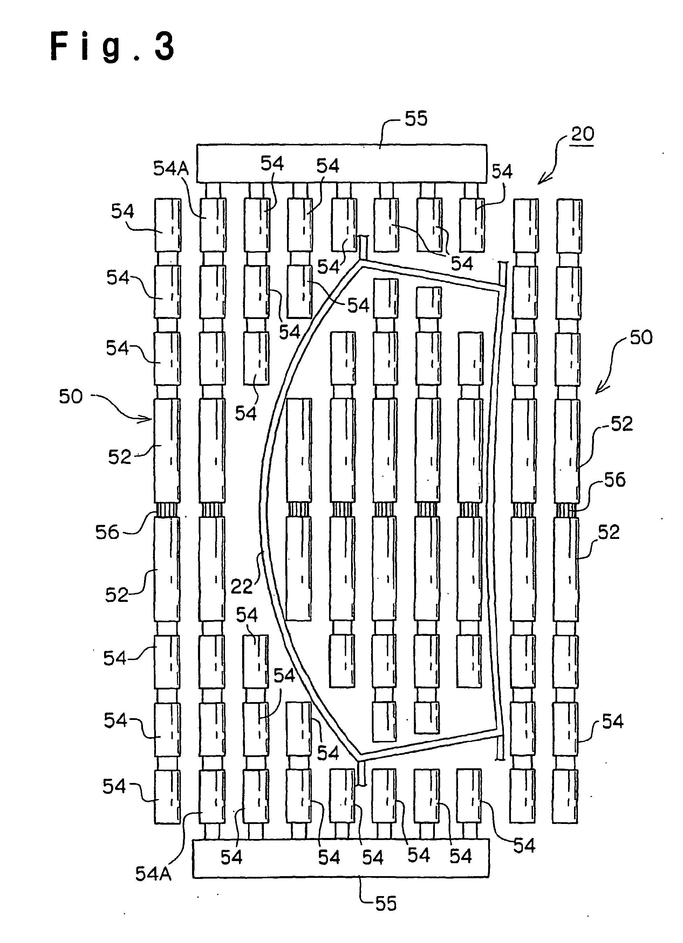

The glass sheet G thus heated is gradually preliminarily bent under gravity on a roller conveyer for preliminary bending 20 provided from the outlet of the heating furnace toward the downstream side, being conveyed thereon. And the glass sheet is positioned at a bending position by an unshown positioner. After that, the glass sheet G is put on a press ring 22 (corresponding a first mold recited in Claims) provided in a gap (see Figs. 2 and 3) of the roller conveyer for preliminary bending 20. The glass sheet is raised by upward movement of the press ring 22 indicated by an arrow B in Fig. 1, being put on the press ring 22, and is pressed against a bending surface 26, which is provided on a mold 24 (corresponding to a second mold recited in Claims) and is formed in such a convex shape so as to downwardly project. Thus, the glass sheet G is bent in a desired shape along the bent shape of the bending surface 26. Since the glass sheet is bent in a shape approximate to the bending surface 26 of the mold 24 at the preliminary bending stage, it is possible to reduce the possibility of local application of a strong force to the glass sheet during pressing performed later. Thus, it is possible to improve the quality of the glass sheet as the final product.

The press ring 22 is formed in a frame shape as shown in Fig. 3 so as to correspond to the outline of the glass sheet G for an automobile backlight shown in Fig. 2. The press ring 22 not only has a function to convey the bent glass sheet G to the air-cooling/tempering apparatus 16, putting the glass sheet thereon, but also plays a role as a quench ring. In order that a trace by pressing, a scratch or the like is formed in a surface of the glass sheet by the press ring, it is preferable that the surface of the press ring 22 and/or the bending surface 26 is covered with PBO fiber manufactured by Toyobo Co., Ltd. or Kevlar fiber manufactured by E.I. du Pont de Nemours and Company.

After completion of bending, the glass sheet G is separated from the mold 24 by raising the mold 24 shown in Fig. 1 by a certain amount and downwardly withdrawing the press ring from the mold 24 by a certain amount. After that, the glass sheet G is carried in the direction of an arrow C by horizontal movement of shuttles 28 shown in Fig. 2, being put on the press ring 22, and is conveyed to the air-cooling/tempering apparatus 16 shown in Fig. 1.

The air-cooling/tempering apparatus 16 has an upper blowing head 30 and a lower blowing head 32 provided at upper and lower positions so as to sandwich a tempering position S therebetween. The upper blowing head 30 and the lower blowing head 32 are connected to respective ducts (not shown), which are in turn coupled to a blower (not shown). By this arrangement, cooling air supplied from the blower is provided to the upper blowing head 30 and the lower blowing head 32 through the ducts and is injected toward the tempering position S from these heads. Thus, the glass sheet G has both surfaces air cooled and tempered.

During air-cooling and tempering, the glass sheet G is air-cooled and tempered, being air-floating, since the air pressure given by the lower blowing head 32 is set so as to be higher than the air pressure given by the upper blowing head 30 (the upper blowing head 30 may be provided with a supporting member (not shown) to press the glass sheet against the supporting member by the air pressure from the lower blowing head so as to hold the glass sheet). In the meantime, the press ring 22 is returned to a standby position shown in Fig. 3 (in the gap between adjacent roller units 54). Being synchronized with the returning movement of the press ring 22, a catch ring (not shown) is introduced into the tempering position S of the air-cooling/tempering apparatus 16 to put the glass sheet G thereon after air-cooling and tempering. The catch ring is moved toward a roller conveyer for discharge (not shown) by movement of shuttles (not shown). The glass sheet G is transferred onto the roller conveyer for discharge to be conveyed toward an inspection process as a subsequent process. In the inspection process, the glass sheet G is inspected to see whether the glass sheet has a fault, such as a distom, a wrinkle or a crack. When the glass sheet has no fault, the glass sheet is conveyed to a process for non-defective products. When the glass sheet has a fault, it is conveyed to a process for defective products.

In Fig. 1, reference numeral 34 designates a suction fan. The suction fan 34 communicates with the internal space of the mold 24 through a flexible duct 36. The bending surface 26 of the mold 24 has a plurality of apertures formed therein to communicate with the internal space. The glass sheet G, which is pressed against the bending surface 26 by the press ring 22, is held on the bending surface 26 by a suction force given by the suction fan 34. When the system is provided with a quench ring in addition to the press ring 22, the press ring 22 is withdrawn to the standby position shown in Fig. 3, making use of the time period wherein the glass sheet G is sucked and held by the bending surface 26. Being synchronized with the withdrawing movement of the press ring, the quench ring advances under the bent glass sheet G to receive the glass sheet and moves so as to convey the glass sheet to the air-cooling/tempering apparatus 16.

The mold 24 is coupled with a screw jack 40 through suspending members 38. The screw jack 40 is actuated to raise and lower the mold 24 for controlling the vertical position ¥s of the mold. The mold 24 may be provided with an electric heater to be heated (to, e.g., 400 to 500°C), preventing the temperature of the glass sheet G from decreasing during bending

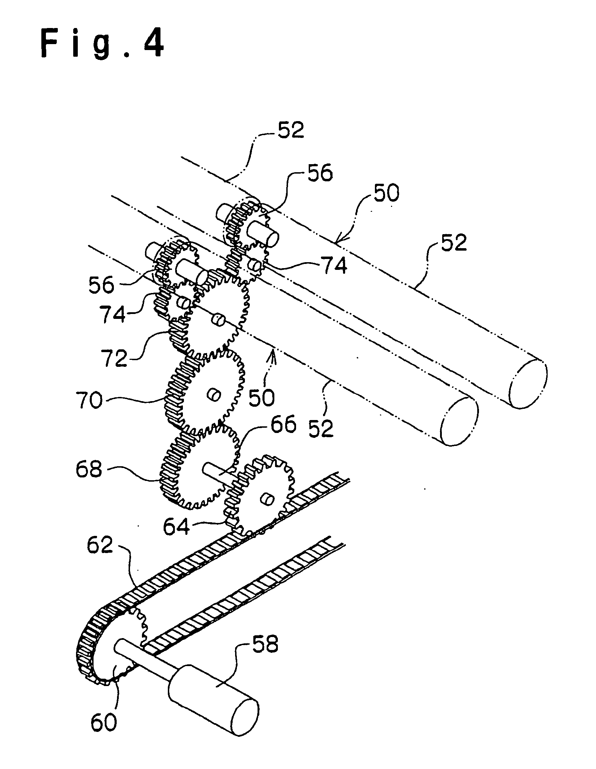

The roller conveyer for preliminary bending 20 comprises a plurality of curved rollers 50 provided along the conveying direction of the glass sheet shown in Fig. 3. The curved rollers 50 may be multi-articulated rollers, each set of which comprises a pair of elongated roller units 52, 52 provided in a central position and three roller units 54, 54, 54 provided on each of both sides thereof so that all roller units are coupled with each other in a bar-shape fashion. The roller units 52, 52 at the central position have a gear 56 provided at the coupling portion therebetween. The curved rollers 50 are rotated by transmitting power from an electric motor 58 shown in Fig. 4 to the gear 56.

The electric motor 58 has a power transmission device, which includes an endless chain 62 and a sprocket 64 engaged with the chain 62, the endless chain being circularly moved by transmitting a rotational force from the electric motor 58 to the sprocket 60. The sprocket 64 is coupled with a gear 68 through a power transmission shaft 66, and the gear 68 is engaged with a gear 72 through a gear 70. The gear 72 is engaged with two gears 74, 74, which are engaged with the gears 56, 56 of adjacent curved rollers 50, 50, respectively. By this arrangement, when the electric motor 58 is driven, the curved rollers 50, 50 are rotated in the same direction as one another through the power transmission device comprising chains and gears thus constructed.

In order to provide the press ring 22 as shown in Fig. 3, some roller units are eliminated from the plural curved roller units 50. Although the roller units 52, 54 that are located inside the press ring 22 are rotated by the power transmission device, no power is transmitted to the roller units 54, 54 that are located outside the press ring 22 in the sets wherein some roller units are eliminated. In order to cope with this problem, the roller units 54 that receive no power transmission are coupled through gear boxes 55 with adjacent roller units 54A in this embodiment. Thus, all roller units 52, 54 forming the curved rollers 50 are rotated.

The roller units 52 and the roller units 54 have the same basic structure as one another except for different lengths. For this reason, explanation of the structure of the roller units 54 will be made, and explanation of the structure of the roller units 52 will be omitted.

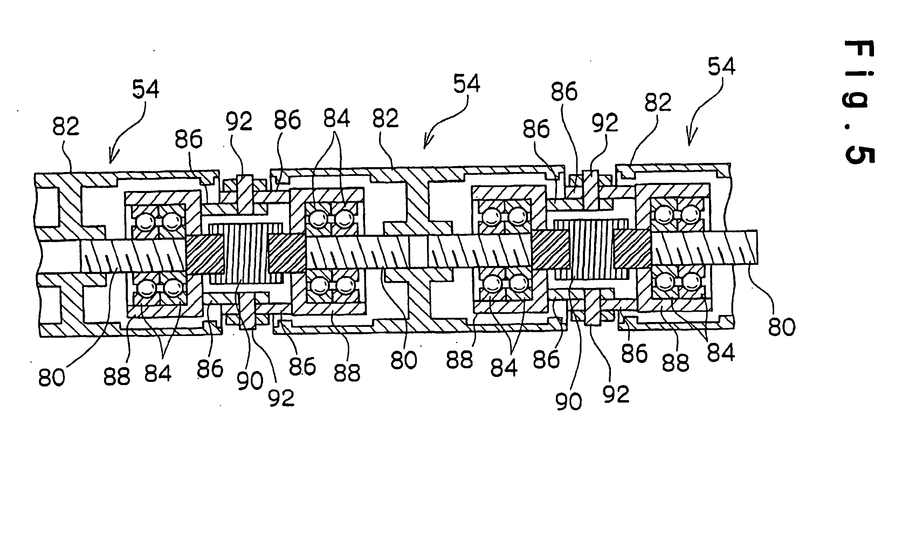

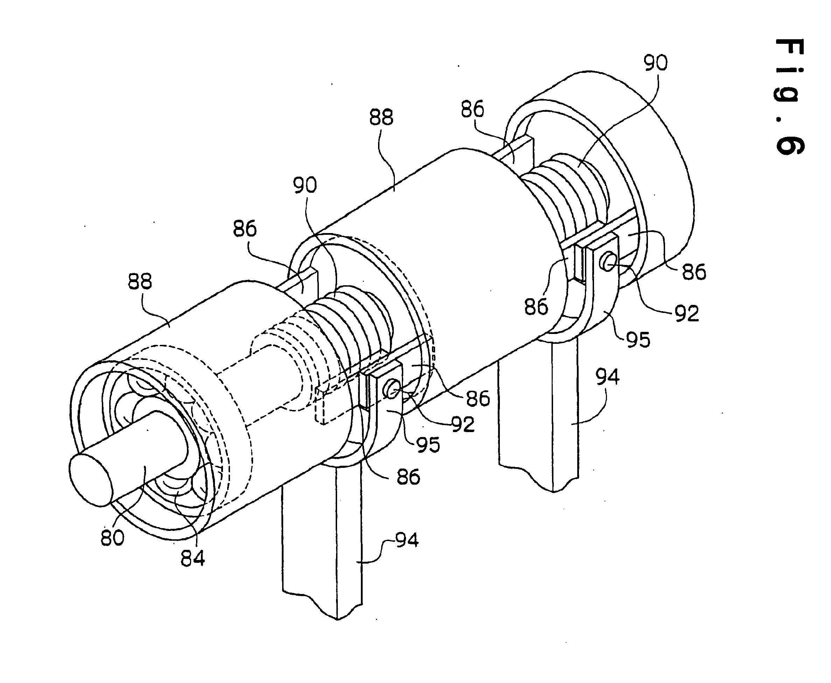

As shown in Fig. 5 and Fig. 6, each of the roller units 54 comprises a cylindrical roller 82 rotatable about a shaft 80, bearings 84 mounted to both ends of the shaft 80, and housings 88 fitted to the outer rings of the respective bearings 84, each of the housings having a pair of couplers 86, 86 (corresponding to coupling portions recited in Claims) projected outwardly. The shafts 80, 80 of adjacent roller units 54, 54 are coupled together through a flexible coupling 90 made of an engineering plastic material or the like so as to be capable of transmitting a rotational force therebetween. The couplers 86, 86 between adjacent roller units 54, 54 are supported so as to be bendable through pins 92, 92 (corresponding to supporting members recited in Claims).

As shown in Fig. 6, the couplers 86, 86 in each pair are symmetrically disposed about the shaft 80 and are coupled with a U-character shape of joint 95 of a lifting rod 94 through coupling pins 92, 92.

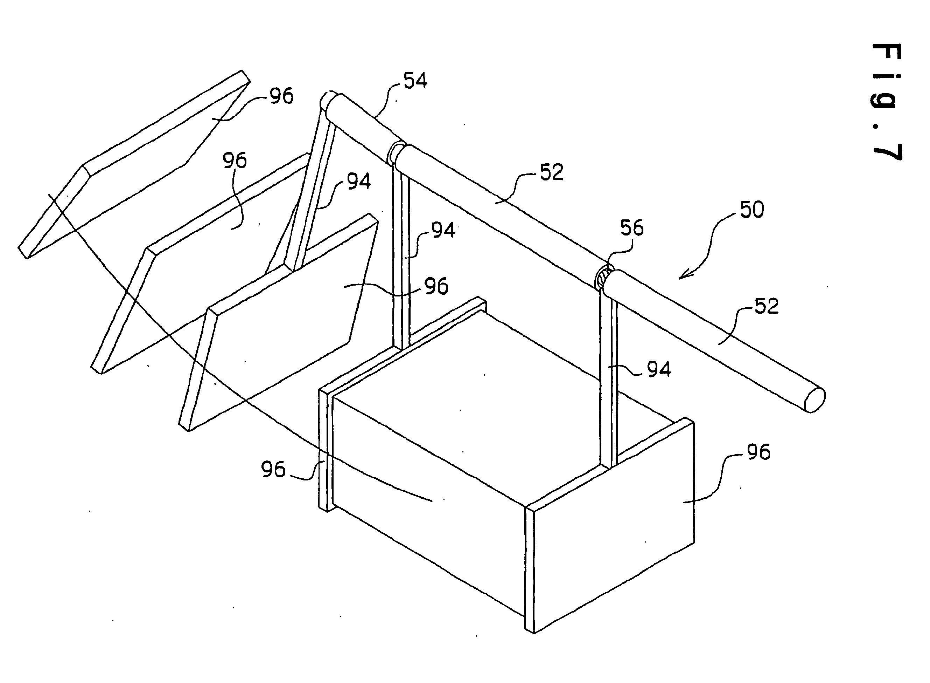

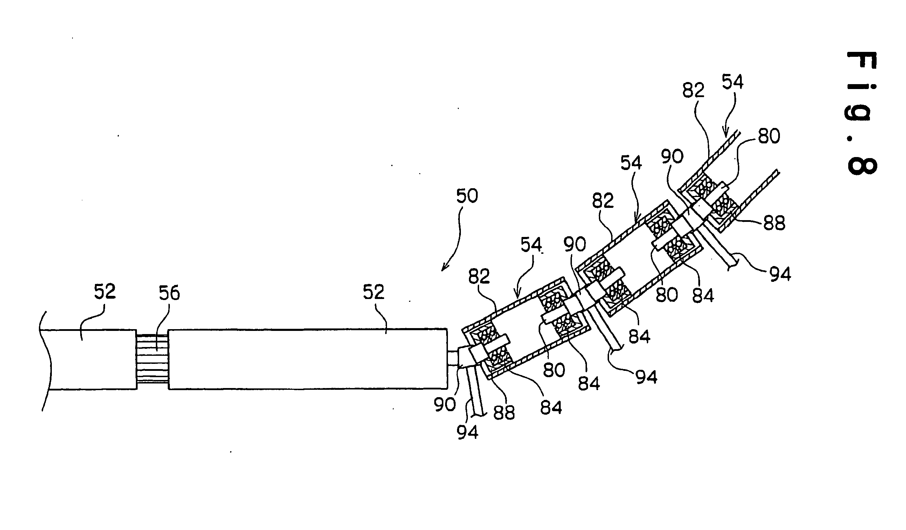

The respective lifting rods 94 are coupled with pipes 96, which displace the respective lifting rods 94 in vertical and horizontal directions as shown in Fig. 7. The pipes 96, 96 can be properly displaced to curve the curved rollers 50 as shown for example in Fig. 8. the glass sheet G is conveyed along the curved surface defined by the curved rollers and is preliminarily bent by gravity.

Although the radius of curvature defined by the curved rollers 50 in each set can be arbitrarily set under control of the controller CTR shown in Fig. 2. It is preferable that the radiuses of curvature are set so as to gradually increase from the upstream side toward the downstream side in the conveying direction and to be substantially equal to the radiuses of curvature of the bending surface 26 of the mold 24 shown in Fig. 1 at a downstream end. By this arrangement, it is possible to minimize the occurrence of an optical distortion or a wrinkle in the glass sheet G by subsequent pressing since the glass sheet G that has arrived just under the mold 24 has been preliminarily bent in a shape, which approximates to the shape of the bending surface 26.

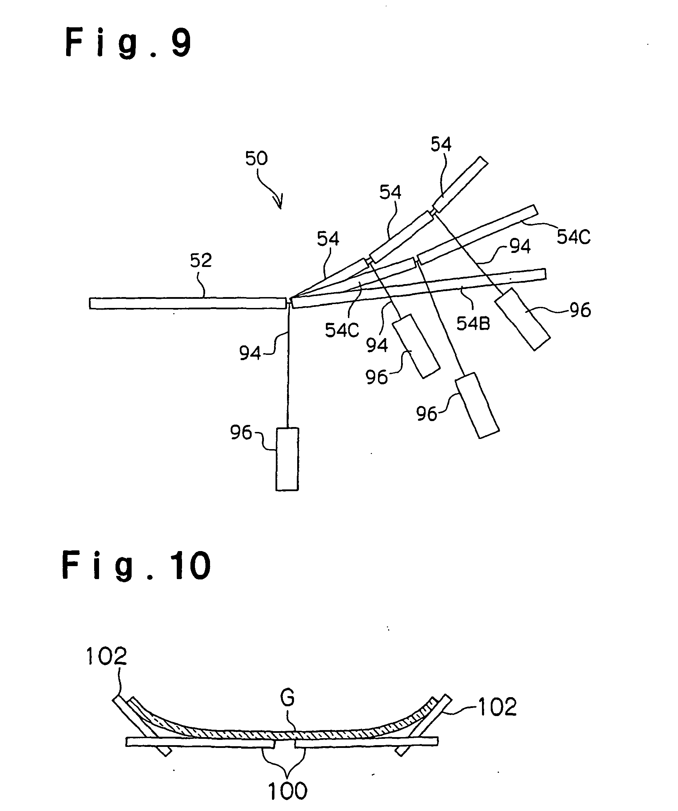

As shown in Fig. 9, the roller units 54, which are coupled with the roller units 52, are configured so that a roller unit 54B on the upstream side in the conveying direction comprises a single elongated roller set at a small inclination angle, that the roller units 54C next to the roller unit 54B comprise two rollers set at a greater inclination angle than the roller unit 54B, and that the roller units 54 next to the roller unit 54C comprise three rollers set at a greater inclination angle than the roller units 54C. It is possible to easily set the radiuses of curvature of the curved rollers 50 so as to gradually increase from the upstream side toward the downstream side in the conveying direction by changing the lengths of the roller units 54, 54B or 54c, or adjusting the inclination angle thereof.

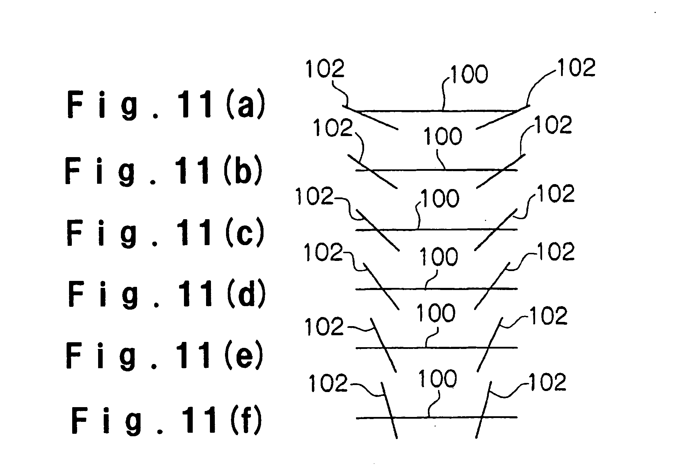

As an alternative to the configuration stated above, the curved rollers may comprise paired horizontal rollers 100, 100 and inclined rollers 102, 102 provided in the vicinity of outer ends of the paired horizontal rollers as shown in Fig. 10. By using the curved rollers thus configured, it is possible to set the inclination angles of the inclined rollers 102, 102 to the horizontal rollers 100 so as to gradually increase from the upstream side (a) toward the downstream side (f) in the conveying direction as shown in Fig. 11. Thus, it is possible to set the radiuses of curvature of the curved rollers so as to gradually increase from the upstream side toward the downstream side in the conveying direction. The curved rollers may comprise flexible shafts and rollers rotatably carried thereon so as to form a curved surface by flexing the flexible shafts as proposed in, e.g., US20030159469A1. Detailed explanation of this alternative will be omitted.

As shown in Fig. 2, the press ring 22 is reciprocated in a range from the bending position to the tempering position S of the air-cooling/tempering apparatus 16 (see Fig. 1) by the shuttles 28. The shuttles 28 are provided on reciprocating devices 110 as shown in Fig. 2 (corresponding to a conveyer for conveying a first mold to an air-cooling/tempering apparatus). The reciprocating devices 110 are provided on both sides of the press ring 22 so as to extend along the conveying direction of the glass sheet. The shuttles 28 are coupled with both sides of the press ring 22.

Each of the reciprocating devices 110 comprises a linear guide 112 for one of the shuttles 28, an endless belt 114 coupled with the one shuttle 28, pulleys 116 having the belt 114 entraining thereabout, an electric motor 118 for transmitting a rotational force to one of the pulleys or the like. By this arrangement, the rotational force is transmitted to the one pulley 116 through gears 120, 122 and a drive shaft 124. Since the drive shaft 124 is also coupled with a pulley (not shown) in the reciprocating device 110 indicated by chain double-dashed lines, the rotational force is transmitted from the electric motor 118 to both reciprocating devices 110. By this arrangement, the belts 114 on both sides simultaneously make a circular movement to move the shuttles 28 at the same speed as each other. In conjunction with the movement of the shuttles, the press ring 22 is moved.

The shuttles 28 have screw jacks 130 provided thereon to lift the press ring 22. The respective screw jacks 130 have respective screws 132 engaged with respective guide plates 134, which are coupled with the press ring 22 and are supported so as to be liftable by the shuttles 28 through respective linear guides 136. By this arrangement, when the screw jacks 130 are driven, the press ring 22 is raised or lowered in a range from the standby position shown in Fig. 3 to a pressing position wherein the glass sheet G can be pressed against the mold 24 shown in Fig. 1.

Now, the operation of the system for bending a glass sheet 10 thus constructed will be explained. The glass sheet G that has been heated to the bending temperature in the heating furnace 12 is transferred onto the roller conveyer for preliminary bending 20 from the outlet of the heating furnace 12. The glass sheet G is preliminarily bent by gravity along the curved conveying surface defined by the curved rollers 50 in the course of being conveyed to the bending position by the roller conveyer for preliminary bending 20.

When the glass sheet thus preliminarily bent is transferred onto the press ring 22 at the bending position, the glass sheet is pressed against the bending surface 26 of the mold 24 by upward movement of the press ring 22 to be bent so as to have a desired radius of curvature.

After that, the press ring 22 is moved downward by a small amount to separate the bent glass sheet G from the bending surface 26 of the mold 24.

Next, the press ring 22 is moved toward the air-cooling/tempering apparatus 16. When the press ring 22 is introduced into the tempering position S, cooling air is injected toward the glass sheet G from the upper blowing head 30 and the lower blowing head 32 to air-cool and temper the glass sheet G.

As explained, in accordance with the system for bending a glass sheet in this embodiment, the bent glass sheet G is conveyed to the air-cooling/tempering apparatus 10 by moving the press ring 22 with the glass sheet put thereon to the air-cooling/tempering apparatus 16 without being conveyed to the air-cooling/tempering apparatus 16 by rollers. By this arrangement, it is possible to increase the conveying speed for the glass sheet in comparison with conveyance by rollers. Thus, it is possible to shorten the time period from discharge of the glass sheet G outside the heating furnace to air-cooling/tempering in comparison with the prior art stated earlier. Additionally, it is possible to prevent the glass sheet G just after pressing from being heat-released because of contact with rollers. Thus, the tempering treatment by the air-cooling/tempering apparatus 16 can be performed while the glass sheet is in a high temperature state.

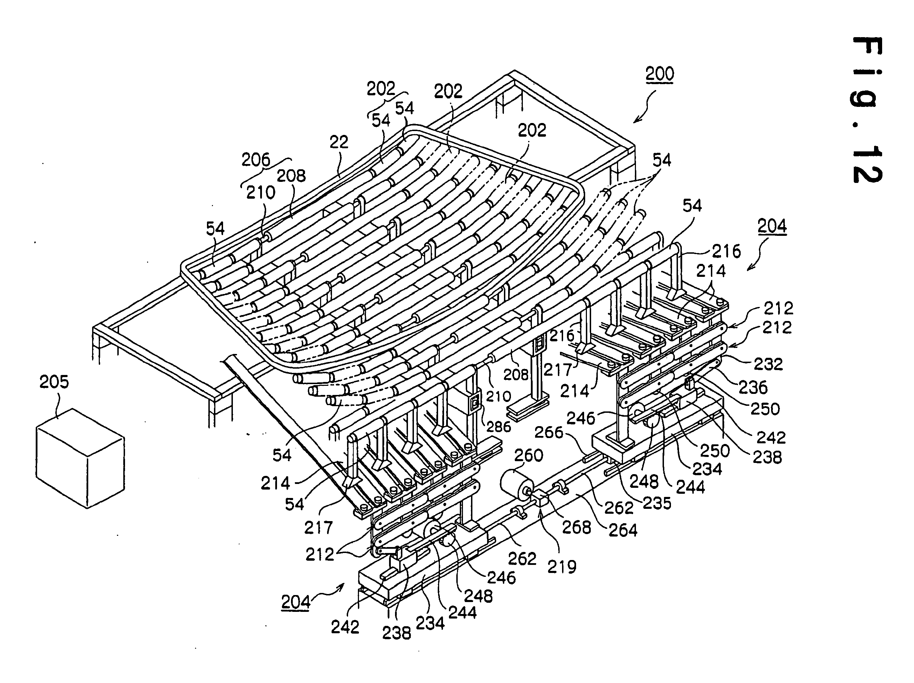

Fig. 12 is a perspective view showing the roller conveyer for preliminary bending 200 according to another embodiment. The roller conveyer for preliminary bending 200 shown in this figure is configured so that a plurality of curved rollers 202 are curved by curving devices 204 stated later and that a glass sheet that is discharged from the heating furnace is preliminarily bent so as to have a substantially circular conical surface by gravity by forming the glass conveying surface defined by the curved rollers 202, in particular, in a shape approximate to a lateral surface of a circular cone.

The operation for curving the curved rollers 202 by the curving devices 204 is performed in synchronization with the operation for conveying a glass sheet by the curved rollers 202 under control of a controller 205. Specifically, during conveying a glass sheet by the curved rollers 202, the curved rollers 202 are controlled so as to have the radius of curvature of the conveying surface dynamically and gradually increasing (gradually changing) and to have a desired radius of curvature when the glass sheet has arrived at the bending position. By this arrangement, while the glass sheet is preliminarily and gradually bent so as to have substantially circular conical surfaces during conveyance by the roller conveyer for preliminary bending 200, the glass sheet is conveyed toward the bending position, and when the glass sheet is positioned at the bending position by an unshown positioner, the glass sheet has been preliminarily bent in a desired preliminary bent shape. After that, the glass sheet is transferred onto the press ring 22 disposed in a gap between curved rollers 202 and is pressed against the bending surface in a substantially circular cone shape of bending surface of the mold (not shown), being carried on the press ring 22 by upward movement of the press ring 22. By this pressing operation, the glass sheet is bent in a desired substantially circular cone shape.

Now, the structure of the curved rollers 202 will be described.

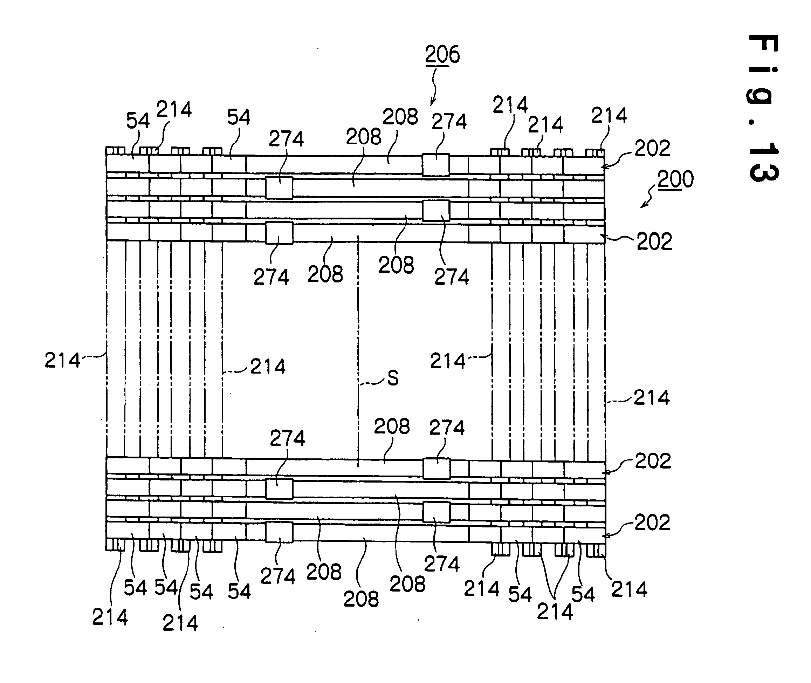

Fig. 13 is a plan view of the roller conveyer for preliminary bending 200, wherein the roller conveyer is shown to be in a flat state before being curved. As shown in this figure, the curved rollers 202 in each set have an elongated horizontal roller 206 provided in a central portion and four roller units 54 coupled together on both sides thereof. The number of the coupled roller units 54 is not limited to four. The number may be chosen so as to form a desired curved conveying surface by the roller units 54.

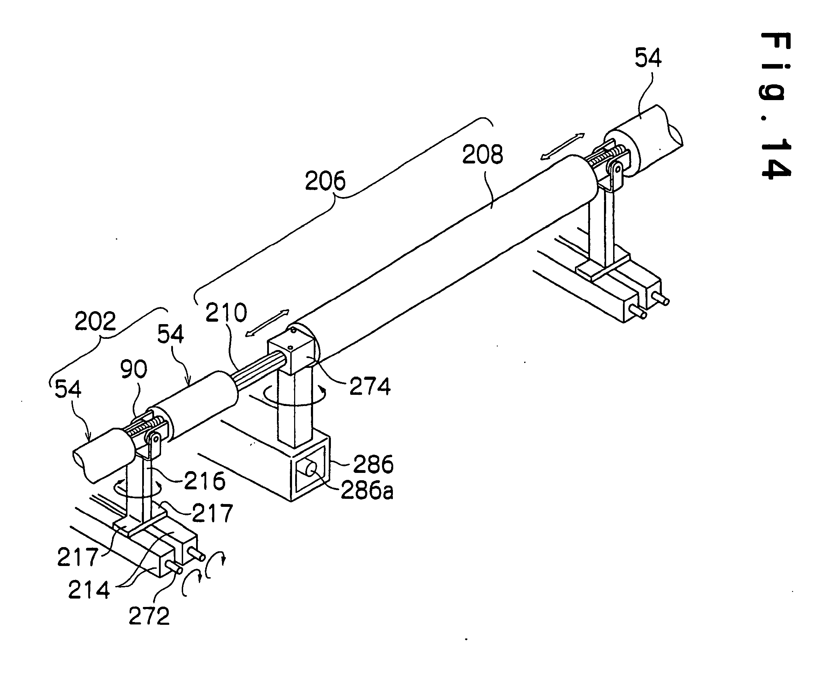

Fig. 14 is a perspective view showing the structure of each of the horizontal rollers 206. Each of the horizontal rollers 206 comprises a cylindrical roller body 208 for conveying a glass sheet and spline shafts 210 disposed so as to be introduced into and withdrawn from both ends of the roller body 208. By this arrangement, it is possible to change the entire length of the horizontal roller 206 by adjusting the length of a spline shaft 210 to be introduced into the roller body 208. The respective spline shafts 210, 210 are splined to spline grooves (not shown) formed on inner peripheral surfaces of the roller body 208 to transmit a rotational force from the spline shafts 210 to the roller body 208. A power transmission device for transmitting a rotational force to the spline shafts 210 will be explained.

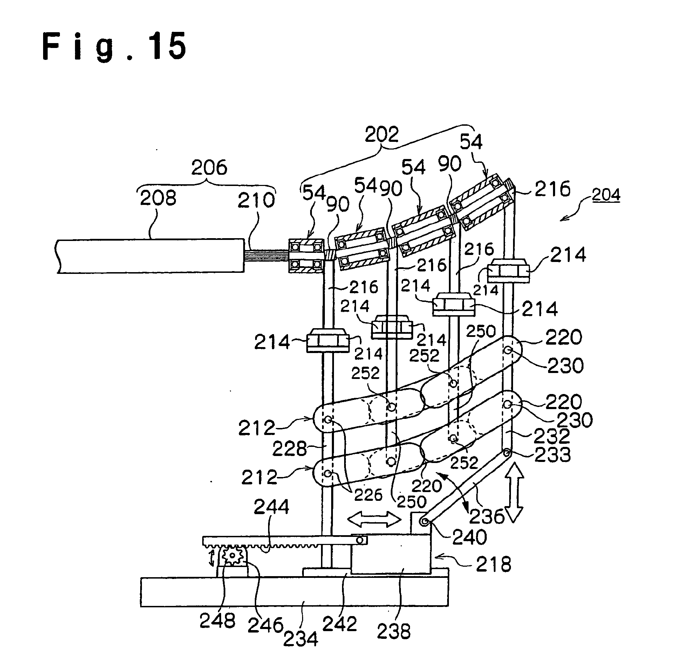

Fig. 15 is a cross-sectional view of roller units 54. As shown in this figure, the respective spline shafts 210 of the horizontal roller 206 in each set are coupled to the respective roller units 54 close to the roller body 208. Adjacent roller units 54, 54 are coupled together through a flexible coupling 90, such as a universal joint. The roller units 54 are curved in a substantially circular arc shape as shown in Fig. 15 by adjusting the inclination angle between adjacent roller units 54, 54 by the curving devices 204. Thus, the conveying surfaces of the roller conveyer for preliminary bending 200 is formed into a curved shape as shown in Fig. 12 by curving the respective roller units 54 forming the curved rollers 208 in a substantially circular arc shape as shown in Fig. 15. Since the structure of the roller units 54 has been explained, referring to the cross-sectional view of the roller units 54 shown in Fig. 5, detailed explanation of it will be omitted. Now, the curving devices 204 will be explained.

The curving devices 204 are symmetrically disposed on both sides of the horizontal rollers 206 so as to sandwich the horizontal rollers therebetween as shown in Fig. 12. By the curving devices, the roller units 54, which are disposed on both sides of the horizontal rollers 206 so as to sandwich therebetween, are simultaneously moved so as to have the same radius of curvature under control of the controller 205.

As shown in Fig. 15, each of the curving devices 204 comprises a pair of curved rods 212, elongated supporting plates 214, stands 216, a lifting unit 218 and the like. Each of the stands 216 has an end formed as a magnet clamp to be magnetically fixed to two supporting plates 214 provided in parallel. As shown in Fig. 12, a roller length adjuster 219 for adjusting the length of the curved rollers 202 is provided on the upstream side in the direction of conveying a glass sheet to be capable of varying the distance between the curving devices 204 provided on both lateral sides. The structure of the roller length adjuster 219 will be described later on.

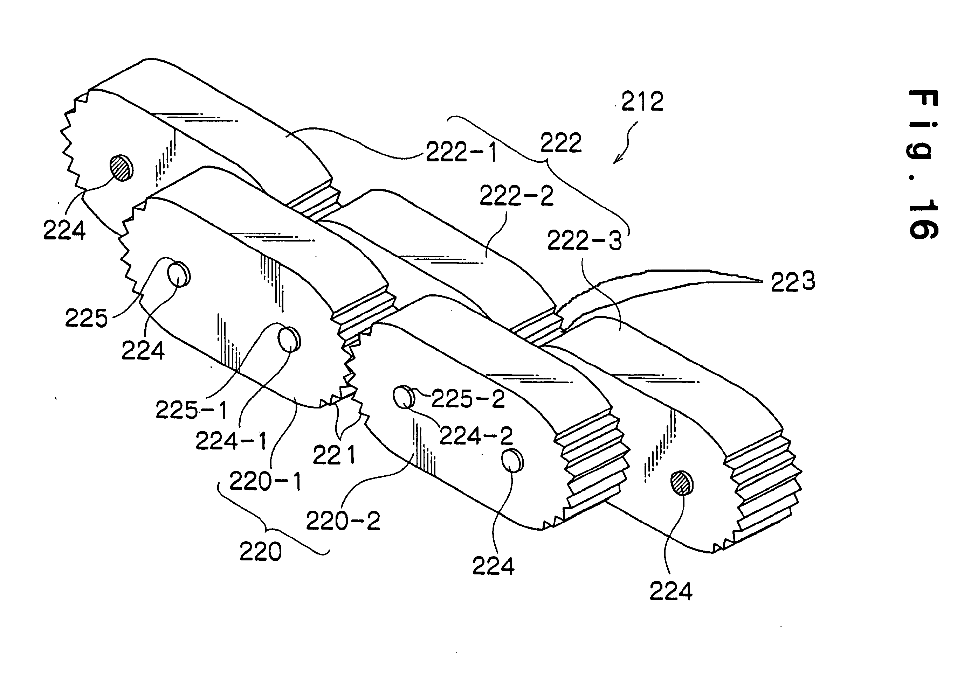

Fig. 16 is an enlarged structural view of essential parts of a curved rod 212. As shown in this figure, each of the curved rods 212 comprises a first linkage and a second linkage, wherein the first linkage comprises a plurality of oval links 220 having both ends 221 toothed, adjacent oval links 220 swingably coupled together through the toothed edges 221 thereof, and the second linkage comprises a plurality of oval links 222 having both ends 223 toothed, adjacent oval links 223 swingably coupled together through the toothed edges 223 thereof.

Adjacent links 220-1 and 220-2 are pivoted on a link 222-2 by passing pins 224-1, 224-2 through holes 225-1 and 225-2 formed in the adjacent links 220-1 and 220-2. Thus, the adjacent links 220-1 and 220-2 are swingably supported by the link 222-2 through the pins 224-1 and 224-2. The links 222 have the same shape as the links 220, are mounted to the links 220 so as to be offset from adjacent links 220 by half the length of the links 220 and are swingably coupled with the links 220 through pins 224.

Each pair of curved rods 212, 212, which are disposed in parallel so as to have a certain spacing therebetween as shown in Fig. 15, has the left ends in Fig. 15 swingably supported by a pole 228 through pins 226 and the right ends in Fig. 15 swingably coupled to a lifting arm 232 through pins 230. The pole 228 is provided so as to vertically stand on a table 234, which is horizontally provided under the roller conveyer for preliminary bending 200. Thus, the paired rods 212 are actuated, using each of pins 226 of the pole 228 as fulcrum and each of pins 230 of the lifting arm 232 as a point of application.

Each of the lifting arms 232 is vertically disposed by being coupled to the paired curved rods 212 through the pins 230, and has a lower end swingably coupled with a leading end of a driving arm 236 through a pin 233.

The driving arm 236 has a base end swingably supported by a slider 238 through a pin 240, the slider forming a part of a lifting device 218. The slider 238 is engaged with the table 234 so as to be slidable along a rail 242 horizontally provided on the table. The slider has a rack 244 horizontally extending from the left end in Fig 15. The rack 244 is disposed so as to mesh with a pinion 248 of an electric motor 246, which is provided on the table 234.

By this arrangement, the slider 238 is horizontally moved by a feeding function, which is generated by the rack 244 and the pinion 248 driven by the electric motor 246. For example, when the slider 238 is moved in the right direction in Fig. 15, the driving arm 236 follows the slider 238 to swing counterclockwise, vertically raising the lifting arm 232. This action applies an upward force to the rightmost links 220 of a pair of curved rods 212 through the pins 230. When the upward force is applied to the rightmost links 220, the respective right most links 220 are counterclockwise rotated about the respective pins 224, and the rotational force thus generated is sequentially transmitted to adjacent links 220 and 222 through respective toothed edges 223 (see Fig. 16). Thus, the curved rods have gradually increased angles by linkage while the crossing angle between adjacent links 220 or 222 is maintained at a small angle. In this manner, the curved rods 211 are curved with a single radius of curvature.

As shown in Fig. 15, two coupling plates 250 are disposed between the pole 228 and the lifting arm 232, and the coupling plates 250 are vertically disposed by being coupled with the paired curved rods 212 through respective pins 252. The pole 228, the lifting arm 232 and the coupling plates 250 have respective upper ends set at the same heights when the paired curved rods 212 shown in Fig. 12 take a horizontal attitude. The supporting plates 214, each of which comprises a pair of strips, are mounted on the respective upper ends.

The respective supporting plates 214 have the stands vertically put thereon. The respective stands 216 are coupled with the respective pairs of strips through respective plates 217 (see Fig. 14) so as to be swingable about respective vertical axis. The respective stands 216 have respective upper ends coupled with the respective flexible couplings 90, each of which comprises, e.g., a universal joint for coupling adjacent roller units 54 together.

By this arrangement, when the curved rods 212 are curved with a single radius of curvature as shown in Fig. 15, three stands 216 are raised in conjunction with the movement of the curved rods to stepwise raise the respective flexible couplings 90 so as to slope upward when going from left to right. Thus, the conveying surface defined by the roller units 54 are curved at a single radius of curvature. This is explanation of the structure and the operation of the curved rollers.

Now, the structure for curving the conveying surface of the roller conveyer for preliminary bending 200 will be explained.

As shown in Fig. 13, the supporting plates 214 are disposed along the conveying direction of the glass plate intersecting with the curved rollers 202 and extends from an upstream position in the conveying direction shown at a lower position in Fig. 13 to a downstream position in the conveying direction shown at an upper position in Fig. 13.

The respective supporting plates 214 have the plural stands 216 shown in Fig. 12 vertically put thereon through the respective plates 217, and the respective stands 216 are coupled with the respective flexible couplings 90 of the respective curved rollers 202.

The respective supporting plates 214 are coupled with the two pairs of curved rods 212 through the respective poles 228, the respective lifting arms 232 and the respecting coupling plates 250 as in the coupling structure shown in Fig. 15 at the downstream position in the conveying direction, the two pair of curved rods being disposed at the downstream position in the conveying direction. The respective poles 228 are vertically put on the respective tables 234, and the respective lifting arms 232 are raised and lowered by the respective lifting devices 218.

In accordance with the roller conveyer for preliminary bending 200 in this embodiment, the respective curving devices 204 are provided at four corners of the roller conveyer for preliminary bending 200, and the four curving devices 204 are driven by the controller 205 shown in Fig. 12 to curve the curved rollers 202 as a whole. Thus, the radius of curvature of the conveying surface can be set at a desired radius of curvature.

Next, a mechanism for forming the conveying surface in a substantially circular cone shape will be explained.

The roller length adjuster 219 shown in Fig. 12 is a device, which moves a pair of right and left tables 234 in an approaching direction and a separating direction to change the entire length of the curved rollers 202 put on the respective tables 234 through the respective curving devices 204. The entire length of the curved rollers 202 in each set is changed by expansion and withdrawal of the respective spline shafts 210 with respect to the roller body 208 of the horizontal roller 206 shown in Fig. 14. A similar roller length adjuster 219 is also provided on the downstream side in the conveying direction, and the adjusting amount by each of both roller length adjusters 219 on the upstream and downstream sides is controlled by the controller 205 shown in Fig. 12. Each of the roller length adjuster 219 comprises an electric motor 260, feed screws 262 and the like. The feed screws 262 are engaged with nuts 235 of the respective tables 234, and the respective tables 234 are slidely supported on linear guides 266, which are provided on a base 264. When the electric motor 260 is driven, a rotational force is transferred from the electric motor to the feed screws 262 on both sides through a gear box 268 to move the tables 234 in an approaching direction and a separating direction under the action of the feed screws 262 and the nuts 235.

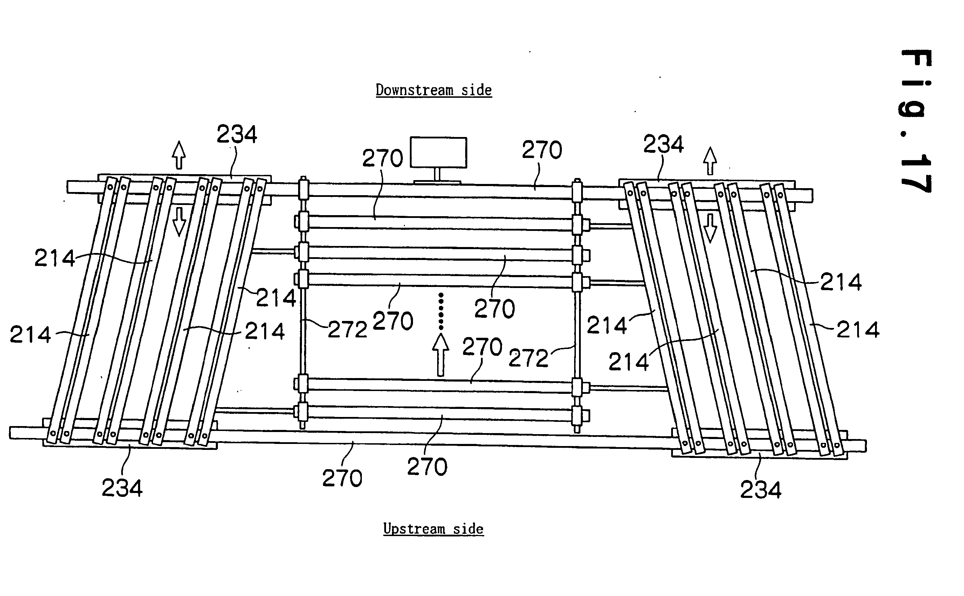

Fig. 17 shows attitudes of the supporting plates 214 based on moving positions of the tables 234, which are provided on the upstream side and the downstream side. The supporting plates take the attitudes when the tables 234 on the upstream side are moved in the separating direction by the roller length adjuster 219 on the upstream side (Fig. 12), and when the tables 234 on the downstream side are moved in the approaching direction by the roller length adjuster 219 on the downstream side. By this action, the supporting plates 214 provided on both right and left sides are modified so as to widen toward the upstream side, and the respective curved rollers 202 carried on the supporting plates through the stands 216 are actuated so as to have gradually decreasing roller lengths from the upstream side toward the downstream side. When the respective curved rollers 202 are curved by the curving devices 204 with the respective curving rollers maintaining their own roller lengths, the conveying surface defined by the roller conveyer for preliminary bending 200 is formed in a substantially circular cone shape shown by chain double-dashed lines in Fig. 12.

By using the roller length adjuster 219 to appropriately change the positions of the tables 234, or by using the curving devices 204 to appropriately change the radiuses of curvature of the curved rollers 202, it is possible to easy change the shape of the conveying surface. Thus, the roller conveyer for preliminary bending 200 can bend many kinds of glass sheets having different models (radiuses of curvature). Accordingly, it is not necessary to perform replacement of curved rollers whenever a job change is necessary.

When the attitudes (directions) of the supporting plates 214 are changed by using the roller length adjusters 219 to move the tables 234, the conveying length of the roller conveyer for preliminary bending 200 (the distance between the supporters 270 provided on the extreme downstream side and the extreme upstream side in Fig. 17) is changed. In other words, when the attitudes of the supporting plates 214 are set to be toward a direction perpendicular to the curved rollers 202 shown in Fig. 13, the conveying length is the same as that of the supporting plates 214. On the other hand, when the attitudes of the supporting plates 214 are directed so as to be oblique with respect to the curved rollers 202 as shown in Fig. 17, the conveying length decreases as the oblique angle increases. From this viewpoint, a device for actuating the curved rollers 202 so as to follow a change in the conveying length is additionally provided on the roller conveyer for preliminary bending 200.

Specifically, in order to follow the oblique movement of the supporting plates 214, the paired tables 234 provided on the downstream side in the conveying direction are supported on the base through the linear guides so as to be movable in the conveying direction. In order to modify the pitch between adjacent curved rollers 202 so as to follow a change in the conveying length, the supporters 270 for supporting the roller bodies 208 of the horizontal rollers 206 (Fig. 17) are provided on a pair of guide bars 272 provided in parallel with the conveying direction so as to be slidable along in the conveying direction. Additionally, in order to follow a change in the oblique angle of the supporting plates 214 and a change in the pitch between adjacent curved rollers 202, the stands 216 are supported by the supporting plates 214 through the plates 217 so as to be swingable about vertical axis as shown in Fig. 12.

Thus, following the movement for changing the conveying length, the paired tables 234 provided on the downstream side in the conveying direction are moved toward the conveying direction to change the pitch between adjacent curved rollers 202. As a result, the respective stands 216 can be swang about the respective vertical axis to smoothly change the conveying length.

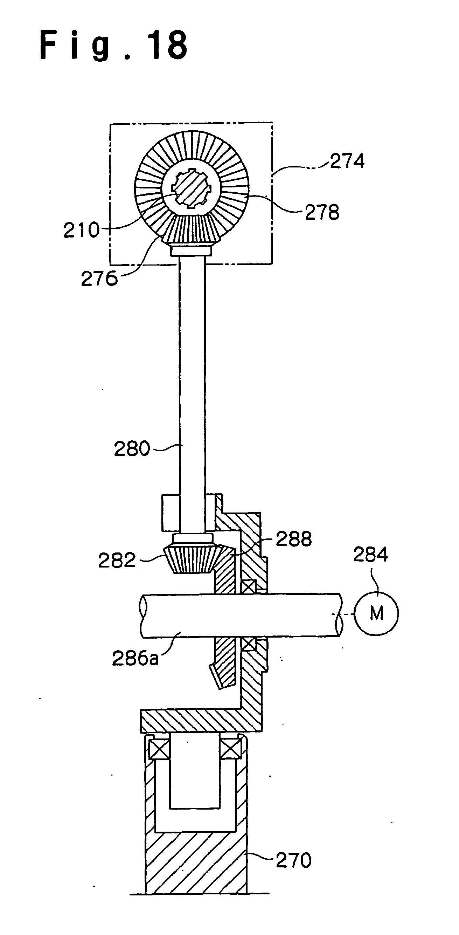

Now, the power transmission device for transmitting a rotational force to the respective curved rollers 202 will be explained. The power transmission device is a device for transmitting the power from an electric motor to the spline shafts 210 the horizontal rollers 209, one of which is shown in Fig. 14. Fig. 18 is a structural view of the power transmission device for transmitting a rotational force to a spline shaft 210.

As shown in Fig. 14, each of gear boxes 274, which are coupled to ends of the respective roller bodies 208, houses a bevel gear 276 shown in Fig. 18, and the bevel gear 276 is meshed with a bevel gear 278 fixed on a spline shaft 210. The bevel gear 276 is mounted to an upper end of a shaft 280 provided in a vertical direction, and an lower end of the shaft 280 is provided with a bevel gear 282. The bevel gear 282 is meshed with a bevel gear 288 carried on a driving shaft 286a driven by the electric motor 284. The driving shaft 286a is housed in a gear box 286 shown in Fig. 14. By this arrangement, when the driving shaft 286a is rotated by power given from the electric motor 284, the rotational force is transmitted to the spline shaft 210 through the bevel gear 288, the bevel gear 282, the shaft 280, the bevel gear 276 and the bevel gear 278 in this order. As a result, the roller bodies 208, one of which is shown in Fig. 14, are rotated to convey a glass sheet along the conveying path defined by the roller conveyer for preliminary bending 200.

The gear boxes 274 are provided in a staggered fashion at symmetrical positions with respect to a centerline S of the conveying path as shown in Fig. 13 in order to avoid conflict between adjacent gear boxes 274. From this viewpoint, the electric motors 284, one of which is shown in Fig. 18, and the driving motors 286a, one of which is shown in Fig. 18, are also provided at symmetrical positions with respect to the centerline S of the conveyance path.

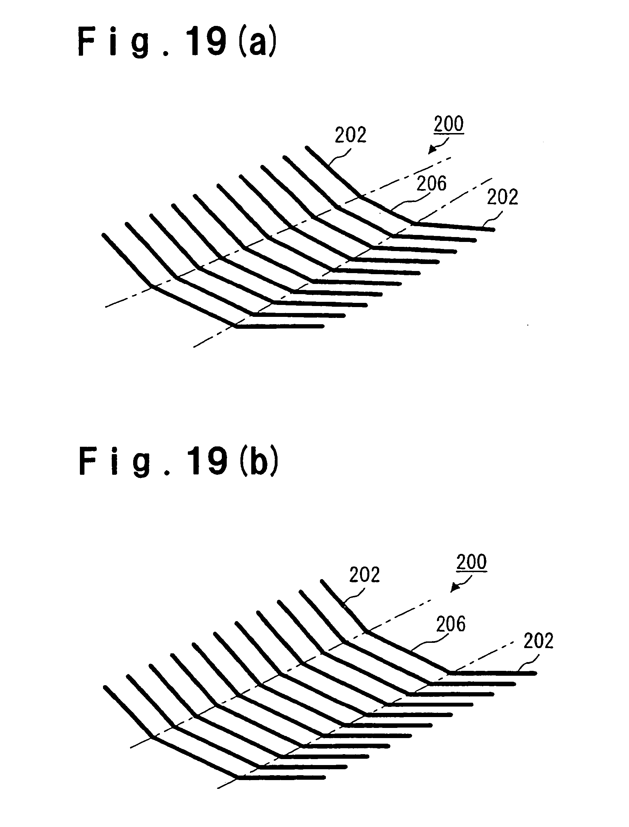

In accordance with the roller conveyer for preliminary bending 200 thus constructed, the plural curved rollers 202 can be curved so as to have a glass sheet conveying surface formed in a shape approximate to a lateral surface of a circular cone (Fig. 19(a)) by the curving devices 204. It is of course that the glass sheet conveying surface can be also formed in a shape approximate to a lateral surface of a circular cylinder as shown in Fig. 19(b). Although the curved rollers 202 are shown to be linear for simple representation in Figs. 19(a) and (b), the curved rollers actually have certain radiuses of curvature, and the conveying surface defined by the conveyer exhibits a shape approximate to a lateral surface of a circular cone or a circular cylinder.

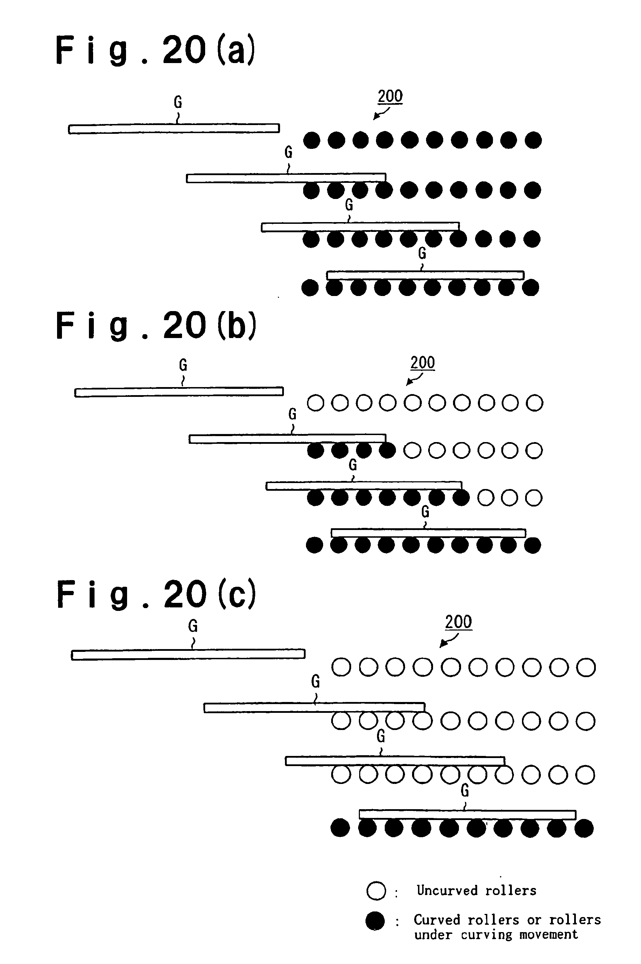

The timing of changing the radiuses of curvature of the curved rollers 202 is arbitrarily set by the controller 205. For example, the radiuses of curvature of all curved rollers 202 may have been changed before a glass sheet is conveyed thereon as shown in Fig. 20(a), the radiuses of curvature may be gradually changed in synchronization with conveyance of a glass sheet G as shown in Fig. 20(b), or the radiuses of curvature of all curved rollers 202 may be simultaneously changed when a glass sheet G has been completely put on the roller conveyer for preliminary bending 200 as shown in Fig. 20(c).

Specifically, in Figs. 20(b) and (c), the roller conveyer for preliminary bending 200 is dynamically controlled so that the radius of curvature of the conveying surface defined by the plural curved rollers 202 gradually increases in synchronization with conveyance of a glass sheet by the curved rollers 202. Since not only gravity but also a compressive force due to the curving movement of the rollers are applied to a glass sheet by dynamically curving the rollers during conveying the glass sheet, it is expected that the glass sheet can be preliminarily bent in a short time period. This means that the time period from discharge of a glass sheet outside the heating furnace to air-cooling and tempering can be shortened, which contributes to production of tempered glass having high quality.

It is evident that the present invention is applicable to the production of windowpanes for not only automobiles but also other objects, such as railway cars, aircraft, ships and buildings. The rollers for preliminary bending used in the present invention is also applicable to bend a glass sheet treated without tempering (a glass sheet for laminated glass). In this case, an annealing zone is provided instead of the air-cooling/tempering apparatus.

## Claims

1. A system for bending a glass sheet, comprising:
a heating furnace, which heats a glass sheet to a bending temperature;
a plurality of rollers for preliminary bending, which conveys the glass sheet discharged from the heating furnace to preliminarily bend the glass sheet, wherein the plurality of rollers for preliminary bending comprise multi-articulated rollers;
a first mold, which has the glass sheet preliminarily bent by the rollers put thereon, and which supports a peripheral edge of the glass sheet;
a second mold, which has a bending surface to press the glass sheet put on the first mold thereagainst;
an air-cooling/tempering apparatus, which blows a cooling medium to a surface of the bent glass sheet to temper the glass sheet; and
a controller, the controller dynamically changing radiuses of curvature of the rollers for preliminary bending in synchronization with conveyance of the glass sheet by the rollers for preliminary bending,
**characterized in that**
said first mold is provided in a gap between the rollers for preliminary bending, and **in that** the system for bending a glass sheet further comprisesa conveyor, which conveys the first mold with the bent glass sheet put thereon to the air-cooling/tempering apparatus.

2. The system according to Claim 1, wherein the rollers for preliminary bending comprises curved rollers.

3. The system according to Claim 1 or 2, wherein the rollers for preliminary bending comprises horizontal rollers and inclined rollers provided in positions close to opposite ends of the horizontal rollers.

4. The system according to any one of Claims 1 to 3, wherein the respective rollers for preliminary bending have radiuses of curvature gradually changing along in a direction of conveying the glass sheet.

5. The system according to any one of Claims 1 to 4, further comprising glass sheet conveying rollers provided in the heating furnace, the glass sheet conveying rollers being the rollers for preliminary bending.

6. The system according to any one of Claims 1 to 5, further comprising a curving device, which changes curving shapes of the rollers for preliminary bending, and a roller length adjuster, which adjusts respective lengths of the rollers for preliminary bending, wherein the rollers for preliminary bending are configured so that lengths of the rollers for preliminary bending can be adjusted by the roller length adjuster.

7. The system according to Claim 6, wherein the roller length adjuster adjusts the lengths of the rollers for preliminary bending so as to gradually decrease from an upstream side toward a downstream side in the direction of conveying the glass sheet, whereby a conveying surface defined by the rollers for preliminary bending is formed in a shape approximate to a lateral surface of a circular cone or a circular cylinder.

8. A method for bending a glass sheet, comprising:
heating a glass sheet to a bending temperature in a heating furnace;
preliminarily bending the glass sheet discharged from the heating furnace by conveying the glass sheet on a plurality of rollers for preliminary bending comprising multi-articulated rollers;
putting the glass sheet preliminarily bent on a first mold, which is formed in a shape along an outline of the glass sheet;
relatively approaching the first mold and a second mold to press the glass sheet put on the first mold therebetween so as to bend the glass sheet into a desired shape, the second mold having a bending surface to press the glass sheet put on the first mold thereagainst; and
dynamically changing radiuses of curvature of the rollers for preliminary bending in synchronization with conveyance of the glass sheet by the rollers for preliminary bending,
**characterized in that**
said first mold is provided in a gap between the rollers for preliminary bending, and **in that** the method for bending a glass sheet further comprisesconveying the first mold with the bent glass sheet put thereon to an air-cooling/tempering apparatus.

## Patentansprüche

1. System zum Biegen einer Glasplatte, umfassend:
einen Wärmeofen, welcher eine Glasplatte auf eine Biegetemperatur erwärmt,
eine Vielzahl von Walzen zum vorläufigen Biegen, welche die Glasplatte, ausgetragen von dem Wärmeofen, befördert, um die Glasplatte vorläufig zu biegen, wobei die Vielzahl von Walzen zum vorläufigen Biegen mehrfach gelenkige Walzen umfassen,
eine erste Form, welche die Glasplatte vorläufig gebogen durch die Walzen darauf aufgebracht aufweist, und welche eine periphere Kante der Glasplatte trägt,
eine zweite Form, welche eine Biegeoberfläche aufweist, um die Glasplatte, aufgelegt auf die erste Form, dagegen zu pressen,
eine Luftkühlungs-/Tempervorrichtung, welche ein Kühlmedium auf eine Oberfläche der gebogenen Glasplatte bläst, um die Glasplatte zu tempern, und
eine Kontrollvorrichtung, wobei die Kontrollvorrichtung dynamisch die Kurvenradien der Walzen zum vorläufigen Biegen in Synchronisation mit dem Fördern der Glasplatte durch die Walzen zum vorläufigen Biegen ändert,
**dadurch gekennzeichnet, daß** die erste Form in einer Aussparung bzw. Lücke zwischen den Walzen zum vorläufigen Biegen angeordnet ist, und dadurch, daß das System zum Biegen einer Glasplatte weiter eine Fördervorrichtung umfaßt, welche die erste Form mit der gebogenen Glasplatte daraufgelegt zu der Luftkühlungs-/Tempervorrichtung befördert.

2. System gemäß Anspruch 1, wobei die Walzen zum vorläufigen Biegen gekrümmte Walzen umfassen.

3. System gemäß Anspruch 1 oder 2, wobei die Walzen zum vorläufigen Biegen horizontale Walzen und geneigte bzw. schräge Walzen, angeordnet in Positionen nahe den entgegengesetzten Enden der horizontalen Walzen, umfassen.

4. System gemäß einem der Ansprüche 1 bis 3, wobei die diesbezüglichen Walzen zum vorläufigen Biegen Kurvenradien aufweisen, die sich graduell entlang in einer Richtung des Beförderns der Glasplatte ändern.

5. System gemäß einem der Ansprüche 1 bis 4, weiter umfassend Glasplattenbefördende Walzen, angeordnet in dem Wärmeofen, wobei die Glasplattenbefördernden Walzen die Walzen zum vorläufigen Biegen sind.

6. System gemäß einem der Ansprüche 1 bis 5, weiter umfassend eine Krümmvorrichtung, welche die Krümmungsformen der Walzen zum vorläufigen Biegen ändert und eine Walzenlängen-Justiervorrichtung, welche die entsprechenden Längen der Walzen zum vorläufigen Biegen justieren, wobei die Walzen zum vorläufigen Biegen derart konfiguriert sind, daß die Längen der Walzen zum vorläufigen Biegen durch die Walzenlängenjustiervorrichtung justiert werden können.

7. System gemäß Anspruch 6, wobei die Walzenlängenjustiervorrichtung die Längen der Walzen zum vorläufigen Biegen derart justieren, graduell von einer stromaufwärtigen Seite zu einer stromabwärtigen Seite in der Richtung des Beförderns der Glasplatte vermindert zu werden, wobei eine Förderoberfläche, definiert durch die Walzen zum vorläufigen Biegen in einer Form gebildet ist, die sich einer lateralen Oberfläche eines kreisförmigen Konus oder eines kreisförmigen Zylinders annähern.

8. Verfahren zum Biegen einer Glasplatte, umfassend:
das Erwärmen einer Glasplatte auf eine Biegetemperatur in einem Wärmeofen, das vorläufige Biegen der Glasplatte, ausgetragen von dem Wärmeofen, durch Befördern der Glasplatte auf einer Vielzahl von Walzen zum vorläufigen Biegen, umfassend mehrgelenkige Walzen,
das Legen der vorläufig gebogenen Glasplatte auf eine erste Form, welche in einer Form entlang einer Außenlinie der Glasplatte gebildet ist,
das relative Annähern der ersten Form und einer zweiten Form, um die Glasplatte, gelegt auf die erste Form, dazwischen zu pressen, um so die Glasplatte in eine gewünschte Form zu biegen, wobei die zweite Form eine Biegeoberfläche aufweist, um die Glasplatte, gelegt auf die erste Form, dagegen zu pressen, und
das dynamische Ändern der Krümmungsradien der Walzen zum vorläufigen Biegen in Synchronisation mit dem Befördern der Glasplatte durch die Walzen zum vorläufigen Biegen, **dadurch gekennzeichnet, daß**
die erste Form in einer Lücke zwischen den Walzen zum vorläufigen Biegen angeordnet ist und darin, daß das Verfahren zum Biegen einer Glasplatte weiter das Befördern der ersten Form mit der darauf gelegten gebogenen Glasplatte zu einer Luftkühlungs-/Tempervorrichtung umfaßt.

## Revendications

1. Un système pour bomber une feuille de verre, comprenant :
un four de chauffage, qui chauffe une feuille de verre jusqu'à une température de bombage ; une pluralité de rouleaux pour un bombage préliminaire, qui transporte la feuille de verre libérée du four de chauffage pour bomber préliminairement la feuille de verre, dans laquelle la pluralité de rouleaux pour le bombage préliminaire comprend des rouleaux multiarticulés ;
un premier moule, qui a la feuille de verre bombée préliminairement par des rouleaux placée dessus, et qui soutient un bord périphérique de la feuille de verre ;
un deuxième moule, qui a une surface de bombage pour presser la feuille de verre placée sur un premier moule sur celle-ci ;
un appareil de refroidissement à l'air/de trempe, qui souffle un moyen de refroidissement vers une surface de la feuille de verre bombée pour tremper la feuille de verre ; et
un contrôleur, le contrôleur changeant dynamiquement les rayons de courbure des rouleaux pour le bombage préliminaire en synchronisation avec le transport de la feuille de verre par les rouleaux pour le bombage préliminaire,
**caractérisé en ce que**
ledit premier moule est fourni dans un espacement entre les rouleaux pour le bombage préliminaire, et **en ce que** le système pour bomber une feuille de verre comprend en outre un convoyeur, qui transporte le premier moule avec la feuille de verre bombée placée dessus vers l'appareil de refroidissement à l'air / de trempe.

2. Le système selon la Revendication 1, dans lequel les rouleaux pour le bombage préliminaire comprennent des rouleaux incurvés.

3. Le système selon la Revendication 1 ou 2, dans lequel les rouleaux pour le bombage préliminaire comprennent des rouleaux horizontaux et des rouleaux inclinés fournis dans des positions proche des extrémités opposées des rouleaux horizontaux.

4. Le système selon l'une quelconque des Revendications 1 à 3, dans lequel les rouleaux respectifs pour le bombage préliminaire ont des rayons de courbure changeant graduellement le long de la direction de transport de la feuille de verre.

5. Le système selon l'une quelconque des Revendications 1 à 4, comprenant en outre des rouleaux convoyeurs de feuilles de verre fournis dans le four de chauffage, les rouleaux convoyeurs de feuilles de verre étant les rouleaux pour le bombage préliminaire.

6. Le système selon l'une quelconque des Revendications 1 à 5, comprenant en outre un dispositif d'incurvation, qui change les formes incurvées des rouleaux pour le bombage préliminaire, et un régleur en longueur de rouleaux, qui ajuste les longueurs respectives des rouleaux pour le bombage préliminaire, dans lequel les rouleaux pour le bombage préliminaire sont configurés afin que les longueurs des rouleaux pour le bombage préliminaire peuvent être ajustées par le régleur en longueur de rouleaux.

7. Le système selon la Revendication 6, dans lequel le régleur en longueur de rouleaux ajuste les longueurs des rouleaux pour le bombage préliminaire afin de diminuer progressivement à partir d'un côté en amont vers un côté en aval dans la direction de transport de la feuille de verre, par lequel une surface de transport définie par les rouleaux pour le bombage préliminaire est formée dans une forme approximative d'une surface latérale d'un cône circulaire ou d'un cylindre circulaire.

8. Un procédé pour bomber une feuille de verre, comprenant :
le chauffage d'une feuille de verre à une température de bombage dans un four de chauffage; un bombage préliminaire de la feuille de verre déchargée du four de chauffage par le transport de la feuille de verre de transport sur une pluralité de rouleaux pour le bombage préliminaire comprenant des rouleaux multiarticulés ;
le placement de la feuille de verre préliminairement bombée sur un premier moule, qui est formé dans une forme le long d'un contour de la feuille de verre ;
l'approche relative du premier moule et d'un deuxième moule pour presser la feuille de verre placée sur le premier moule entre eux afin de bombée la feuille de verre dans une forme désirée, le second moule ayant une surface de bombage pour presser la feuille de verre placée sur le premier moule sur celle-ci ; et
le changement dynamique des rayons de courbure des rouleaux pour le bombage préliminaire en synchronisation avec le transport de la feuille de verre par les rouleaux pour le bombage préliminaire,
**caractérisé en ce que**
ledit premier moule est fourni dans un espacement entre les rouleaux pour le bombage préliminaire, et **en ce que** le système pour bomber une feuille de verre comprend en outre un convoyeur, qui transporte le premier moule avec la feuille de verre bombée placée dessus vers l'appareil de refroidissement à l'air / de trempe.
